(19) Europäisches Patentamt / European Patent Office / Office européen des brevets

(11) **EP 1 849 898 B1**

(12) **EUROPEAN PATENT SPECIFICATION**

(45) Date of publication and mention
of the grant of the patent:
**05.12.2012 Bulletin 2012/49**

(51) Int Cl.:
*D03D 1/00* *(2006.01)*     *A45C 13/30* *(2006.01)*
*B60R 22/12* *(2006.01)*     *D01F 8/14* *(2006.01)*
*D03D 15/00* *(2006.01)*     *A61F 5/02* *(2006.01)*
*A61F 5/042* *(2006.01)*

(21) Application number: **06714035.0**

(22) Date of filing: **17.02.2006**

(86) International application number:
**PCT/JP2006/302894**

(87) International publication number:
**WO 2006/088163 (24.08.2006 Gazette 2006/34)**

(54) **WOVEN STRUCTURE OF BELT FORM AND METHOD FOR PRODUCTION THEREOF**

GÜRTELFÖRMIGES GEWEBE UND HERSTELLUNGSVERFAHREN DAFÜR

STRUCTURE TISSEE D' UNE FORME DE COURROIE ET SON PROCEDE DE FABRICATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **30.06.2005 PCT/JP2005/012139
18.02.2005 JP 2005042147**

(43) Date of publication of application:
**31.10.2007 Bulletin 2007/44**

(73) Proprietor: **KB Seiren, Ltd.
Sabae-city
Fukui 916-0038 (JP)**

(72) Inventors:
• **HARA, Yoshitomo
Ube-shi, Yamaguchi 755-0151 (JP)**

• **UEDA, Hideo
822 (JP)**
• **SAITO, Masaharu
KB Seiren Shataku A-301
Sabae-shi, Fukui 916-0022 (JP)**

(74) Representative: **Kuhnen & Wacker
Patent- und Rechtsanwaltsbüro
Prinz-Ludwig-Strasse 40A
85354 Freising (DE)**

(56) References cited:
WO-A-01/48285          WO-A-2004/013393
DE-U1- 20 120 160     JP-A- 6 257 062
JP-A- 08 188 938       JP-A- 08 299 161
JP-A- 2004 149 964    JP-A- 2004 232 159
JP-U- 02 046 881

**Description**

TECHNICAL FIELD

The present invention relates to a belt-shaped woven structure which is flexible, less prone to twisting and excellent in productivity.

BACKGROUND ART

As a belt to be attached to clothes or bags, a tractive belt for medical use, a belt for lumbago therapy, a seat belt, a belt for transport or the like, a belt-shaped woven structure having a width predetermined depending on the use thereof has been conventionally used. The belt-shaped woven structure is required to have a certain strength, flexibility and untwistableness in the width direction of the structure depending on the use thereof. Where the structure is used as a seatbelt webbing, the structure is required to have comfort while wearing the seat belt, and easy pullout from and retraction to a retractor.
To meet the above demands, a variety of belt-shaped woven structures, particularly seat belt webbings, have been suggested. An example of the suggested structures is a seat belt webbing in which a monofilament is used as a weft thread so as to provide the seat belt webbing with an improved rigidity in lateral direction (widthwise direction) thereof, and prevent twist of the webbing during withdrawing or retracting of the webbing through a slip guide for improving smoothness of retraction of the webbing into the retractor (see PATENT DOCUMENTS 1 to 3).
Further suggested structures include a belt-shaped woven structure in which two types of multifilaments having different monofilament finenesses from each other and being commingled and confounded to each other are used as weft threads so that lateral rigidity of the structure is improved (see PATENT DOCUMENT 4), and a belt-shaped woven structure having a weft thread provided with a thermocurable resin (see PATENT DOCUMENT 5).

| PATENT DOCUMENT 1: | United States Patent No . 4,107,371 |
|---|---|
| PATENT DOCUMENT 2: | Japanese Unexamined Patent Publication No.2000-190812 |
| PATENT DOCUMENT 3: | Japanese Unexamined Patent Publication No. 2003-41431 |
| PATENT DOCUMENT 4: | Japanese Unexamined Patent Publication No.2000-264162 |
| PATENT DOCUMENT 5: | Japanese Unexamined Patent Publication No.SHO55-116831 |

DISCLOSURE OF THE INVENTION

Problems to be Solved by the Invention

However, the seat belt webbings disclosed in the PATENT DOCUMENTS 1 to 3 are mostly woven by means of a needle loom, in which two weft threads in a bent position aresimultaneouslyinserted. Sinceamonofilamentisless flexuous due to its high rigidity, insertion of the monofilament as a weft thread causes breakage of thread when the monofilament is bent at an end surface of a selvedge of the webbing, which leads to frequent stoppage of weaving operation and deterioration in productivity. Even if threads are not broken, slight projections of monofilament are formed on the end surface of selvedge of the webbing, which deteriorate comfort of the webbing when the webbing is worn as a seat belt.
In the woven structure according to the PATENT DOCUMENT 4, a commingled yarn of a multifilament having a great monofilament fineness and a multifilament having a small monofilament fineness is used. However, since it is difficult to uniformly commingle these filaments, formation of the commingled yarn requires complex processes and deteriorates productivity of the woven structure. To solve this problem, monofilament fineness may be reduced for improving productivity. However, the multifilament having a small monofilament fineness is not capable of sufficiently improving lateral rigidity of the structure. The woven structure according to the PATENT DOCUMENT 5 has a problem that the lateral rigidity drastically decreases over time since the thermocurable resin falls off after repeated use of the webbing.
DE 201 20 160 U 1 discloses a woven seat belt webbing with threads in warp and weft direction, the threads being each made of multifilaments. The multifilaments of the threads in weft direction predominantly have a bicomponent structure consisting of two polymer components with different melting points. The component with the lower melting point forms at least partially the surface of the individual filament. The bicomponent structure is preferably a core/sheath structure and both, the core component and the sheath component are polymers selected from polyesters, polyamides and polyolefins or their copolymers.
In view of the foregoing, an object of the invention is to provide a technique for efficiently producing a belt-shaped woven structure such as a seatbelt webbing which is capable of maintaining long-lasting lateral rigidity after repeated use, less prone to twisting, flexible and easy to handle.

Means for Solving the Problems

For achieving the above object, a first aspect of the invention is a belt-shaped woven structure for a seat belt webbing formed by weaving a non-heat fusible synthetic fiber and a heat fusible synthetic fiber containing in a surface portion thereof a heat fusible component having a softening point lower by 30 °C or more than that of the non-heat fusible synthetic fiber, the woven structure having a non heat fusible synthetic fiber as warp threads thereof and a synthetic fiber formed by aligning the non-heat fusible synthetic fibers and the heat fusible synthetic fibers on a parallel direction as weft threads thereof, so that a heat treatment on the woven structure at a temperature higher than the softening point of the heat fusible component fusion bonds the heat fusible synthetic fibers to each other or the heat fusible synthetic fiber and the non-heat fusible fiber, wherein the heat fusible synthetic fiber is a polyester multifilament comprising a polyethylene terephtalate copolymer which is copolymerized with a tertiary component and having a softening ponit of not greater than 200°C and a bailing water shrinkage factor (BWS) of 10 to 40 %.

According to a second aspect of the invention, the heat fusible component in the heat fusible synthetic fiber is present in a proportion of not less than 5 % by weight with respect to a whole amount of the weft threads of the woven structure. According to a third aspect of the invention, not less than 15 % of the heat fusible component is exposed on the surface of the heat fusible synthetic fiber. According to a fourth aspect of the invention, the weft threads of the woven structure include a polyester multifilament having a fineness of 500 to 3000 dtex and including a heat fusible component having a softening point of 120 to 200 °C.

Further, a fifth aspect of the invention is a belt-shaped woven structure for a seat belt webbing in which the heat fusible synthetic fiber is a core-sheath type polyester multifilament consisting of a copolyester mainly containing polyethylene terephthalate as a sheath component and a homopolyester as a core component, and the non-heat fusible synthetic fiber is homopolyester multifilament.

A sixth aspect of the invention is a belt-shaped woven structure (for a seat belt webbing) in which the heat fusible synthetic fiber is a polyester multifilament having a softening point of not greater than 200 °C and a greatest heat shrinkage stress of 0.1 to 1.0 cN/dtex. A seventh aspect of the invention is a belt-shaped woven structure for a seat selt webbing in which the heat fusible synthetic fiber is a polyester multifilament having a softening point of not greater than 200 °C and a dry heat shrinkage stress of 0.1 to 1.0 cN/dtex.

According to an eighth aspect of the invention, the belt-shaped woven structure for a seat belt webbing is woven by means of a needle loom.

Further, a ninth aspect of the invention is a method according to claim 9 of producing the belt-shaped woven structure for a seat belt webbing in which the non-heat fusible fiber and a polyester multifilament having a fineness of 250 to 1500 dtex as a heat fusible synthetic fiber aligned to a parallel direction are tuber woven as weft threads of the woven structure by means of a needle loom. A tenth aspect of the invention is a method of producing the belt-shaped woven structure for a seat belt webbing in which the heat fusible synthetic fiber has a monofilament fineness of 3 to 25 dtex.

Effects of the Invention

In the belt-shaped woven structure of the invention, the heat fusible synthetic fiber is used in a part of weft threads thereof so that a heat treatment on the woven structure fusion bonds the heat fusible synthetic fibers to each other or the heat fusible synthetic fiber and the non-heat fusible synthetic fiber, whereby fibers are prevented from displacing in longitudinal and lateral directions. Thus, the woven structure is less prone to twisting in lateral direction (widthwise direction) and has improved usability. Since the twist of the woven structure is prevented by fuse bonding the fibers to each other, enhancement in the rigidity of the heat fusible synthetic fiber itself is not required, thereby providing a relatively flexible woven structure which is usable as a seatbelt webbing having comfort for the wearer and smooth handling such as withdrawing or retracting of the webbing. Further, since a multifilament having an excellent flexibility can be used in the heat fusible synthetic fiber, insertion of the multifilament as a weft thread at a high speed in a needle loom does not cause any trouble, thereby advantageously improving productivity.

Among the belt-shaped woven structures of the invention, a woven structure comprising heat fusible synthetic fibers containing heat fusible component of not less than 5 % by weight with respect to the whole amount of weft threads of the woven structure is provided with sufficient fusion bonding between fibers and excellent anti-twist effect.

A woven structure in which not less than 15 % of the heat fusible component of the heat fusible synthetic fiber is exposed on the surface of the fiber is also provided with sufficient fusion bonding between fibers and an excellent anti-twist effect.

The belt-shaped woven structure in which a polyester multifilament having a fineness of 500 to 3000 dtex is used in the weft threads and the softening point of the heat fusible component is 120 to 200 °C is provided with particularly excellent anti-twist effect and flexibility.

Further excellent anti-twist effect and flexibility are obtained by employing a woven structure in which a core-sheath type polyester multifilament comprising a copolyester mainly containing polyethylene terephthalate as a sheath component and a homopolyester as a core component is used as the heat fusible synthetic fiber, and a homopolyester multifilament is used as the non-heat fusible synthetic fiber; a woven structure including a polyester multifilament comprising polyethylene terephthalate copolymer which is copolymerized with a tertiary component and has a softening point of not greater than 200 °C and a boiling water shrinkage factor (BWS) of 10 to 40 % is used as the heat fusible synthetic fiber; the woven structure including a polyester multifilament comprising polyethylene terephthalate copolymer which is copolymerized with a tertiary component and having a softening point of not greater than 200 °C can have a greatest heat shrinkage stress of 0.1 to 1.0 cN/dtex as the heat fusible synthetic fiber.

The woven structure including a polyester multifilament comprising polyethylene terephthalate copolymer which is copolymerized with a tertiary component and has a softening point of not greater than 200 °C and a dry heat shrinkage stress of 0.1 to 1.0 cN/dtex as the heat fusible synthetic fiber is also provided with further excellent anti-twist effect and flexibility.

The forgoing belt-shaped woven structure of the invention provides highly improved productivity where the woven structure is woven by means of a needle loom, compared to a conventional seatbelt webbing provided with an anti-twist effect.

Productivity of the foregoing belt-shaped woven structure is highly improved by employing the production method of the invention in which a polyester multifilament having a fineness of 250 to 1500 dtex used as a heat fusible synthetic fiber is interwoven as at least a part of weft threads of the woven structure by means of a needle loom.

Productivity of the belt-shaped woven structure is further improved by the production method of the invention in which the heat fusible synthetic fiber has a monofilament fineness of 3 to 25 dtex.

BRIEF DESCRIPTION OF THE DRAWINGS

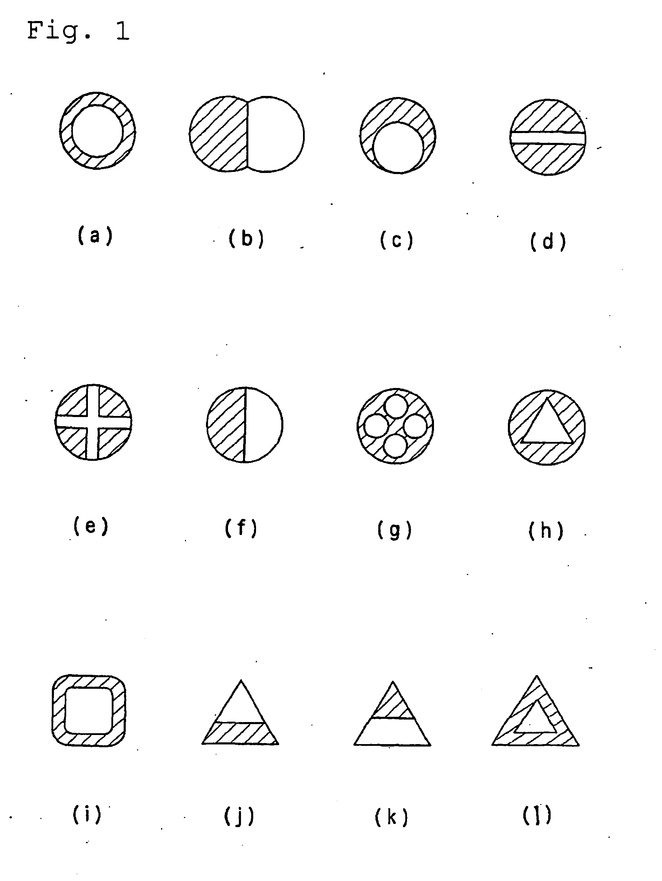

Figs. 1 (a) to (1) are cross sectional views of heat fusible multifilaments, respectively, usable in the present invention.

BEST MODE FOR CARRYING OUT THE INVENTION

The best mode for carrying out the present invention will hereinafter be described in detail.

The belt-shaped woven structure according to the invention is formed by weaving a non-heat fusible synthetic fiber and a heat fusible synthetic fiber containing in a surface portion thereof a heat fusible component having a softening point lower by 30 °C or more than that of the non-heat fusible synthetic fiber, and the heat fusible synthetic fiber is used in at least a part of weft threads of the woven structure.

The non-heat fusible synthetic fiber is a main component of the belt-shaped woven structure, and examples thereof include a polyester fiber, a polyamide fiber and a polyolefin fiber, from which any suitable one is selected depending on purpose. In view of weather resistance such as weather resistance fastness and weather resistance degradability and dimensional stability, the polyester fiber is preferably used, and a homopolyester fiber is more preferred.

Where a polyester multifilament is used as the non-heat fusible synthetic fiber, it is preferable that the filament has a rupture strength of approximately 6.0 to 10 cN/dtex and elongation of approximately 10 to 30 %. The rupture strength and the elongation are measured in conformity with JIS (Japanese Industrial Standard) L-1013 by means of Autograph Tensile Tester AGS-1KNG produced by Shimadzu Corporation under a condition that a specimen having a length of 20 cm is measured at a low constant tensile speed of 20 cm/minute.

Examples of a resin component in the polyester multifilament include polyethylene terephthalate, polybutylene terephthalate and polyethylene naphthalate. In view of balance between costs and mechanical property, a homopolyester multifilament comprising polyethylene terephthalate is preferred.

The heat fusible synthetic fiber, which is used together with the non-heat fusible synthetic fiber, is required to contain in a surface portion thereof a heat fusible component having a softening point lower by 30 °C or more than that of the non-heat fusible synthetic fiber.

The term "softening point" as used herein is a temperature at which a resin composing the synthetic fiber begins to soften. Specifically, the term means a softening temperature measured in conformity with the "TESTING METHOD FOR SOFTENING TEMPERATURE OF THERMOPLASTICS FILM AND SHEETING BY THERMOMECHANICAL ANALYSIS" defined in JIS K7196.

Since the softening points of the non-heat fusible synthetic fiber and the heat fusible synthetic fiber are different to each other by not less than 30 °C, a heat treatment on the woven structure formed with using both fibers fixes the heat fusible synthetic fibers to each other or the heat fusible synthetic fiber and the non-heat fusible synthetic fiber by fusion bonding, whereby fibers are prevented from displacing from each other at the points the fibers intersect or contact, so that the woven structure is prevented from twisting. This is a remarkable feature of the present invention.

The "fusion bonding" does not necessarily require fusing of the heat fusible component to a liquid state for fixing the fibers as a bond, that is, softening of surface portion of the heat fusible component suffices for increasing contacting area between the fibers and fixing the fibers at intersecting or contacting points.

For obtaining the above effects, the softening point of the heat fusible component is preferably 120 to 200 °C, more preferably, 150 to 200 °C, and further more preferably, 160 to 190 °C. Where the softening point is lower than 120 °C, it may be difficult to spin or produce the heat fusible synthetic fiber itself, and abrasion of resin component in the heat fusible synthetic fiber may deteriorate lateral rigidity over time. Where the softening point is higher than 220 °C, since a temperature required for heat setting of the woven structure is close to a fusing point of the heat fusible component, the non-heat fusible synthetic fiber may suffer thermal damage which results in an insufficient strength required to a belt or the like. Where a heat setting temperature is set to an inappropriately lower temperature, fibers may be insufficiently fusion bonded and twisting in lateral direction may not be prevented.

The heat fusible component in the heat fusible synthetic fiber is preferably formed of the same type of resin as the non-heat fusible synthetic fiber. Specifically, it is preferable that the non-heat fusible synthetic fiber is formed of a homopolymer and the heat fusible component is formed of a copolymer of the same polymer and has a softening point lower by 30 °C or more than that of non-heat fusible synthetic fiber.

Where a polyester multifilament is used as the non-heat fusible synthetic fiber, examples of the heat fusing component include polyesters such as polybutylene terephthalate, polytetramethylene terephthalate and polyethylene terephthalate, and copolymers thereof. Where a polyamide multifilament is used as the non-heat fusible synthetic fiber, examples of the heat fusible component include polyamides such as nylon 6, nylon 12 and nylon 66, and copolymers thereof.

In view of weather resistance and dimension stability, combinations of polyester resins are preferred, specifically, a homopolyester is preferred as the non-heat fusible synthetic fiber and a copolyester is preferred as the heat fusible component.

Examples of the copolyester preferred as the heat fusible component include ester copolymers containing terephthalic acid and ethylene glycol as main components; copolymer components consisting of one or more than one of: an acid component including aliphatic dicarboxylic acid such as oxalic acid, malonic acid, azelaic acid, adipic acid and sebacic acid, aromatic dicarboxylic acid such as phthalic acid, isophthalic acid and naphthalenedicarboxylic acid, and alicyclic dicarboxylic acid such as hexahydroterephthalic acid, diol-type glycol of aliphatic, alicyclic, or aromatic system such as diethyl glycol, polyethylene glycol, propylene glycol, hexanediol, paraxylene glycol and bis-hydroxyethoxy phenylpropane, which are each contained in a predetermined proportion; and, if necessary, oxyacid such as p-hydroxybenzoic acid in a proportion of not greater than 50 mol%.

A particularly preferred copolyester contains isophthalic acid and hexanediol copolymerized with the terephthalic acid and ethylene glycol. Preferably, the thus obtained isophthalate copolyester contains 10 to 30 mol% of isophthalic acid for facilitating fusion bonding and improving weaving performance. Variations in proportions of the monomer components allow adjustments for obtaining a desired softening point.

Preferably, not less than 15 % of the heat fusible component is exposed on the surface of the heat fusible synthetic fiber, while the component may have any configuration. Specifically, where not less than 15 % of the heat fusible component is exposed on the surface of the fiber, increased proportion of the heat fusible component softens for fusion bonding of intersecting and contacting points of fibers, thereby providing sufficient anti-twist effects.

Examples of the configuration of the heat fusible synthetic fiber having the heat fusible components exposed on the surface of the fiber include: (1) a synthetic fiber entirely formed of the heat fusible component, (2) a synthetic fiber formed by paralleling (aligning in a parallel direction) synthetic fibers formed solely of heat fusible components or synthetic fibers containing heat fusible components, andnon-heat fusible synthetic fibers, and (3) a composite fiber formed by mixing a heat fusible component and a non-heat fusible component (having a softening point higher by 30 °C or more than that of the heat fusible component). These fibers are preferably used in the configurations of multifilaments for improving weaving performance and flexibility.

A preferable example of the synthetic fiber (1) which is entirely formed of the heat fusible component is a highly shrinkable polyester fiber as disclosed in Japanese Unexamined Patent Publication No. 2004-232159, specifically, a thermally shrinkable polyester fiber formed of polyethylene terephthalate, which is a copolymer of isophthalic acid and 2,2-bis[4(2-hydroxyethoxy)phenyl]propane, by a SPD method (direct spinning-drawing method).

As the synthetic fiber (1) which is entirely formed of the heat fusible component, a polyester multifilament comprising a copolyester multifilament, in which the tertiary component is copolymerized and which has a softening point of not greater than 200 °C and a boiling water shrinkage factor (BWS) of 10 to 40 % (hereinafter referred to as "highly shrinkable polyester multifilament"), is used. With this fiber, a heat treatment after a weaving process allows each clearance between filaments in the multifilament to be closed due to shrinkage stress of the heat fusible components, whereby the filaments are easily formed into a strip of monofilaments. Since the formation of a strip of monofilaments ensures sufficient fusion bonding of the heat fusible synthetic fiber and non-heat fusible synthetic fiber, the use of such a multifilament in weft threads provides appropriate rigidity as well as flexibility, which provides excellent anti-twist effects and comfort for the wearer. A particularly preferred highly shrinkable polyester multifilament has a boiling water shrinkage factor (BWS) of 20 to 40 %, which provides excellent anti-twist effects and comfort for the wearer. Where the highly shrinkable polyester multifilament wound about a bobbin is subjected to harsh conditions of high temperature such as transportation by truck in summer, it is preferred that the multifilament has the BWS of not greater than 20 % for facilitating handling thereof in case of deformation of the bobbin by heat.

For imparting of rigidity to the belt-shaped woven structure by an appropriate shrinkage, while maintaining flexibility, the highly shrinkable polyester multifilament preferably has the greatest heat shrinkage stress within the range of 0.1 to 1.0 cN/dtex. Within this range, further excellent anti-twist effects and flexibility are obtained.

For forming a seatbelt webbing, heat setting is usually carried out at approximately 200 °C, and the highly shrinkable polyester multifilament preferably has a dry heat shrinkage factor at 130 °C of not less than 15 %, more preferably not less than 20 %, and a dry heat shrinkage factor at 180 °C preferably of not less than 15 %, more preferably not less than 20 %. Within these ranges, rigidity in the lateral direction and excellent anti-twist effects are easily obtained. Since the end surface of selvedge where the weft threads are folded prevents projection of fibers for maintaining good quality, it is preferable that the upper limits of the ranges are approximately 50 %.

For obtaining an appropriate shrinkage stress, the highly shrinkable polyester multifilament preferably has a limiting viscosity [η] of 0.6 to 0.8, more preferably, 0.65 to 0.75. The highly shrinkable polyester multifilament preferably has a fineness of approximately 100 to 1000 dtex, a monofilament fineness of approximately 3 to 25 dtex, and a filament number of approximately 8 to 200. Within these ranges, excellent productivity for forming the belt-shaped woven structure is achieved.

As the synthetic fiber (2) which is formed by paralleling synthetic fibers formed solely of heat fusible components or synthetic fibers containing heat fusible components and non-heat fusible synthetic fibers, a synthetic fiber converged by commingling, assembly winding, or additional twisting and covering by interlacing treatments after paralleling the fibers is preferably used. As the synthetic fibers formed solely of heat fusible components or synthetic fibers containing heat fusible components, the above mentioned fibers (1) or (3) are preferably used.

Examples of the composite fiber (3) comprising two components include a core-sheath type composite filament consisting of a core formed of a non-heat fusible component and a sheath formed of a heat fusible component, and other various fibers having composite configurations in which at least a part of the heat fusible component is exposed to the surface of the fiber. Figs. 1 (a) to (1) illustrate the cross sections of examples of the composite fiber. In the figures, the shaded portions denote the portions formed of the heat fusible component, while the blank portions denote the portions formed of the non-heat fusible component. The contours of the cross sections are not necessarily a circle, and the fibers having cross sections of various shapes including oval, hollow, triangle, square, star or the like may be used.

Among them, a composite fiber in which not less than 40 % of the heat fusible component is exposed on the surface of the fiber is preferred. For obtaining stability in anti-twist effects, a more preferred composite fiber has a core-sheath structure as shown in Fig. 1 (a) consisting of heat fusible component as a sheath and non-heat fusible component as a core.

A core-sheath type composite polyester multifilament comprising isophthalic copolyester as the heat fusible component of the sheath and homopolyester as the non-heat fusible component of the core is preferably used as the core-sheath type composite fiber. In this fiber, the proportion of core/sheath on a volume basis is preferably 5/1 to 1/5, more preferably 3/1 to 1/2.

The above composite fiber has monofilament fineness of 3 to 25 dtex and filament number of 8 to 200. Within these ranges, an excellent productivity of the belt-shaped woven structure can be obtained.

The belt-shaped woven structure of the present invention is obtained by weaving the aforementioned non-heat fusible synthetic fiber and heat fusible synthetic fiber, in which the heat fusible synthetic fiber should be used as at least a part of weft threads.

The weft thread of the belt-shaped woven structure to be used as a seatbelt webbing preferably has a fineness of 500 to 3000 dtex, in view of comfort for the wearer and retractability into a retractor. A fineness less than 500 dtex may be unable to sufficiently improve lateral rigidity, while a fineness exceeding 3000 dtex may excessively increase longitudinal rigidity and deteriorate flexibility. A particularly preferred fineness of the weft thread is 1000 to 2600 dtex for obtaining a woven structure having well balanced rigidities in warp and weft directions.

The heat fusible synthetic fiber preferably has a monofilament fineness of 3 to 25 dtex. A monofilament fineness of less than 3 dtex may deteriorate spinnability and productivity as well as lateral rigidity and abrasion resistance, while a monofilament fineness exceeding 25 dtex may excessively increase rigidity of the monofilament, leading to deterioration in productivity and projections of monofilament from the end surface of selvedge of the woven structure, which impairs comfort for the wearer where the woven structure is used as a seatbelt webbing or the like. A polyester mutifilament having a monofilament fineness of 5 to 12 dtex is particularly preferred.

The heat fusible component in the heat fusible synthetic fiber is preferably present in a proportion of not less than 5 % by weight with respect to the whole amount of the weft threads of the belt-shaped woven structure. The presence of the heat fusible component less than 5 % by weight is insufficient for fusion bonding and may result in deterioration in anti-twist effects in lateral direction and abrasion resistance. The presence of an excessive amount of the heat fusible component may excessively increase lateral rigidity, resulting in deterioration in manageability and comfort for the wearer where the woven structure is used as a seatbelt webbing. A preferable content proportion is determined depending on the type of usage of the heat fusible synthetic fiber. In the aforementioned core-sheath type composite fiber, for example, the heat fusible component is preferably present in a proportion of 5 to 20 % by weight, more preferably, 10 to 15 % by weight, with respect to the whole amount of the weft threads. In the synthetic fiber formed by paralleling non-heat fusible synthetic fibers and heat fusible synthetic fibers, the whole weft threads preferably consist of the paralleled fabric which contains the heat fusible components in a proportion of 5 to 50 % by weight, more preferably, 10 to 40 % by weight, with respect to the whole amount of the weft threads.

The belt-shaped woven structure of the invention may be woven by means of any loom such as a needle loom, a rapier loom, a shuttle loom or the like which is capable of weaving narrow woven fabrics. Particularly, the needle loom which allows simultaneous inserting of two weft threads in folded positions is preferred, in view of productivity and reduction in production costs.

Where the heat fusible synthetic fiber is inserted as at least a part of the weft threads in the weaving by the needle loom, use of multifilament as the heat fusible synthetic fiber allows the woven fabric to obtain excellent flexibility and prevents breakage or projection of fibers at an end surface of selvedge where the weft threads are folded, whereby products having good quality can be produced at a highly improved productivity. For producing the belt-shaped woven structure to be used as a seatbelt webbing, the weft threads to be inserted preferably have a fineness of 250 to 1500 dtex, in view of comfort for the wearer and retractability into a retractor. With weft threads having fineness of 500 to 1300 dtex, well balanced rigidities in warp and weft directions can be easily obtained.

In the weaving by the needle loom, since two weft threads in folded positions are simultaneously beaten, the weft threads in a woven fabric have a fineness preferably of 500 to 3000 dtex, more preferably, of 1000 to 2600 dtex, which is doubled from the fineness before the beating operation.

Although fineness of warp threads of the belt-shaped woven structure of the invention is not particularly limited, for using as a seatbelt webbing having strength, abrasion resistance and flexibility, warp threads formed of non-heat fusible synthetic fiber preferably have a fineness of 300 to 3000 dtex, more preferably, 500 to 2000 dtex. With this structure, the warp threads preferably have a monofilament fineness of 1 to 25 dtex, more preferably, 4 to 17 dtex. Where warp thread formed of heat fusible synthetic fiber is used, the warp threads preferably have a fineness of 50 to 500 dtex.

Where multifilament is used in the warp threads of the belt-shaped woven structure of the invention, since combined strength and weaving performance can be easily obtained, the multifilament is preferably twisted for approximately 100 to 500 T/m. Within this range, deterioration in strength of the multifilament due to the additional twisting is prevented, and a certain degree of slight twisting imparts convergence to the multifilament and improves weaving performance. Further, since the number of warp threads to be inserted can be increased, a belt-shaped woven structure of high density is easily obtained, whereby a seatbelt webbing having high strength and excellent abrasion resistance is obtained.

The type of weaving for forming the belt-shaped woven structure is not particularly limited. Examples of the type of weaving generally include twill weaving, flat weaving, hollow weaving and the like, among which the twill weaving is preferred for forming a woven structure to be used as belts or the like.

The weaving density of the belt-shaped woven structure of the invention is not particularly limited. However, the sum of warp CF (cover factor) and weft CF (total CF) as shown in the following formulas is preferably 5000 to 30000, more preferably, 8000 to 20000, in view of comfort for the wearer and retractability into a retractor where the woven structure is used as a seatbelt webbing. Further, the warp CF and weft CF are preferably 3000 to 29500 and 500 to 2000, respectively. Where the woven structure is used as a seatbelt webbing, the warp CF is generally set to be greater than the weft CF for obtaining a seatbelt webbing having improved strength in longitudinal direction for reducing thickness, comfort for the wearer and retractability into a retractor. The use of the heat fusible synthetic fiber of the invention as a weft thread allows the resulting woven structure to obtain improved strength, abrasion resistance, rigidity and flexibility, even if the number of inserted warp threads or weft threads is small. Therefore, the present invention allows reduction of total CF of a seatbelt webbing as compared to conventional ones having the same functions, resulting in an improvement of productivity.

[ FORMULA 1]

$$\text{Warp CF} = \sqrt{\text{Total fineness of warp threads (dtex)}} \times \text{Density of warp threads (piece/2.54 cm)}$$

$$\text{Weft CF} = \sqrt{\text{Total fineness of weft threads (dtex)}} \times \text{Density of weft threads (piece/2.54 cm)}$$

The heat fusible and non-heat fusible synthetic fibers used in the belt-shaped woven structure may contain in the resin materials thereof, a small amount of inorganic particles such as titanium oxide, silicon oxide, calcium carbonate, silicon nitride, aluminum oxide, talc, clay and the like, a known agent such as an antioxidant, a coloration inhibitor, a flame retardant, an ultraviolet absorber, an antimicrobial agent, a sequestering agent and various plasticizing agents within such an amount that these additives neither obstruct production of synthetic fiber nor impair mechanical properties.

The belt-shaped woven structure of the invention may be dyed after weaving by dyeing the woven structure with a dispersive dye or the like under high pressure. However, where homopolyester multifilament is used as the non-heat fusible synthetic fiber and copolyester multifilament is used as the heat fusible synthetic fiber, for example, it is preferable that a spun-dyed fiber having fastness to light is used so as to maintain a desired color for a long period of time. The spun-dyed fiber is formed by either a method in which a colorant is blended during polymerizaiton of resins or a method in which a master chip containing a colorant in high concentration and a base chip are blended in fiber spinning. In view of production costs or the like, a chip blend method using the master chip is preferred.

The belt-shaped woven structure of the invention is heat treated for softening the heat fusible component in the heat fusible synthetic fiber at a temperature appropriately determined for obtaining desired lateral rigidity required depending on the use of the woven structure. Where a polyester multifilament is used as the non-heat fusible synthetic fiber in the warp threads, the heat treatment is preferably carried out at a temperature of, for example 180 to 200 °C for stabilizing the inner structure thereof at a temperature higher than a crystallization temperature.

For using the belt-shaped woven structure as a seatbelt webbing, heat setting is carried out on the woven structure after weaving under high tension at approximately 200 °C so as to adjust mechanical properties of the webbing. Since the heat setting process also provides the effects of "heat treatment" of the present invention, the woven structure in which fibers are fusion bonded is obtained without adding any particular process.

Further, the belt-shaped woven structure of the invention may be subjected to a friction restraining treatment for obtaining a seatbelt webbing having a good slidability which improves the retractability of the webbing into a retractor. A treatment agent to be used for the friction restraining treatment preferably contains polyether compounds. The friction restraining treatment agent may be blended at any step during weaving and after completion of weaving of the woven structure.

The thus obtained belt-shaped woven structure of the present invention includes the heat fusible synthetic fiber in at least a part of weft threads, in which a heat treatment fusion bonds the heat fusible synthetic fibers to each other or the heat fusible synthetic fibers and the non-heat fusible synthetic fibers, so that the fibers are not displaced from each other in both longitudinal and lateral directions. Therefore, the resulting woven structure is less twistable in the lateral direction (widthwise direction) and usable. Since the twist of the woven structure is restrained by the fusion bonding between fibers, the heat fusible synthetic fiber itself is not required to have enhanced rigidity and allowed to maintain flexibility, whereby a seatbelt webbing formed of the woven structure is provided with comfort for the wearer, smooth handling such as retraction into and withdrawing from a retractor and usability. Further, since a multifilament having an excellent flexibility can be used as the heat fusible synthetic fiber, high speed insertion of weft threads consisting of the multifilament in weaving by means of a needle loom will not cause any trouble, thereby improving productivity.

EXAMPLES

Next, Examples will be described in conjunction with Comparative Examples. It should be noted that the present invention is not limited to the Examples.

Limiting viscosity, Boiling water shrinkage factor (BWS), Greatest heat shrinkage stress and Dry heat shrinkage factor are measured in the following methods.

Limiting viscosity

Limiting viscosity [η] was measured in a combined solvent containing phenol and tetrachloroethane in a proportion of phenol/tetrachlloroethane = 6/4 at 20 °C by a conventional method.

Boiling water shrinkage factor (BWS)

A specimen fiber having a length of 500 mm loaded with 2 mg/dtex was immersed in boiled water for 15 minutes, dried with wind, and then the shrinkage factor of the specimen was calculated by the following formula:

$$\text{BWS (\%)} = [\text{(initial length of specimen} - \text{length of specimen after shrinkage)} / \text{initial length of specimen}] \times 100$$

Greatest heat shrinkage stress

A specimen having a length of 100 mm loaded with 1/50g/dtex as an initial load was heated in an increasing rate of 120 °C/minute from room temperature to 250 °C, stress on the specimen at each temperature was measured, and a curve chart of the measured values was drawn by the Heat stress measuring apparatus KE-2S, produced by Kanebo Engineering Company. The greatest stress value (cN/dtex) in the measured values was determined as the Greatest heat shrinkage stress.

Dry heat shrinkage factor

Dry heat shrinkage factors (%) under conditions of temperatures at 130 °C and 180 °C were obtained in accordance with JIS (Japanese Industrial Standard) L-1013 8.18.2 b) Filament Shrinkage factor (method B).

Example 1

As warp threads, polyester multifilaments having a fineness of 1670 dtex/144f, a rupture strength of 8.4 cN/dtex, elongation rate of 12 % and being spun-dyed in black were arranged with a warp density of 390 pieces/2. 54 cm. Weft threads were prepared by paralleling:

core-sheath type heat fusible polyester filaments, each of which had a fineness of 280 dtex/16 f and consists of a sheath component formed of polyethylene terephthalate having a softening point of 185 °C to which 25 mol% of isophthalic acid was copolymerized and a core component formed of polyethylene terephthalate having a Limiting viscosity of 0.68 and a softening point of 240 °C (BELLCOUPLE (registered trademark) available from Kanebo Gosen K.K.: core/sheath proportion = 3/2) ; and polyester filaments, each of which had a fineness of 720dtex/72 f, a softening point of 240 °C, a rupture strength of 6.5 cN/dtex and elongation rate of 20 %. The filaments were woven in a width of 5 cm with a warp density of 20 pieces/2. 54 cm by means of a needle loom to form a webbing. The webbing was heat treated under 200 °C, and the sheath component softened by the treatment fusion bonded surrounding polyester fibers. Thus, the intended belt-shaped woven structure was obtained.

Example 2

A belt-shaped woven structure was formed in the same manner as Example 1 except that the core-sheath type heat fusible polyester filaments in Example 1 were replaced with polyester multifilaments, each of which had a fineness of 280 dtex/48 f; a softening point of 200 °C; Limiting viscosity of 0.69; Greatest heat shrinkage stress of 0.23 cN/dtex; BWS of 23 %; Dry heat shrinkage factor at 130 °C of 21 %; and Dry heat shrinkage factor at 180 °C of 30 %, which wholly comprised a copolymerized component to which 5 mol% of isophthalic acid and 5 mol% of 2,2-bis[4-(2-hydroxyethoxy)phenyl]propane were copolymerized.

Example 3

Abelt-shaped woven structure was formed in the same manner as Example 1 except that the core-sheath type heat fusible polyester filaments in Example 1 were replaced with core-sheath type heat fusible polyester filaments having a fineness of 167 dtex/48 f and consisting of a sheath component formed of polyethylene terephthalate having a softening point of 185 °C to which 25 mol% of isophthalic acid was copolymerized and a core component formed of polyethylene terephthalate having a Limiting viscosity of 0.68 and a softening point of 240 °C (BELLCOUPLE (registered trademark) available from Kanebo Gosen K.K.: core/sheath proportion = 2/1).

Example 4

Abelt-shaped woven structure was formed in the same manner as Example 1 except that core-sheath type heat fusible polyester filaments, each of which had a fineness of 110 dtex/24 f and consisted of a sheath component formed of polyethylene terephthalate having a softening point of 185 °C to which 25 mol% of isophthalic acid was copolymerized and a core component formed of polyethylene terephthalate having a Limiting viscosity of 0.68 and a softening point of 240 °C (BELLCOUPLE (registered trademark) available from Kanebo Gosen K.K.: core/sheath proportion = 1/1) was paralleled in the weft threads.

Example 5

A belt-shaped woven structure was formed in the same manner as Example 1 except that the weft threads were prepared by paralleling composite heat fusible polyester multifilaments (35 % of the heat fusible component was exposed), each of which had a fineness of 280 dtex/24 f and a configuration shown in Fig. 1 (e) in which the plus shaped blank portion in the cross section was formed of polyethylene terephthalate having a softening point of 185 °C to which 25 mol% of isophthalic acid was copolymerized, and the other shaded portions in the cross section were formed of polyethylene terephthalate having a Limiting viscosity of 0.68 and a softening point of 240 °C; and polyester multifilaments having a fineness of 720 dtex/72 f, a softening point of 240 °C, a rupture strength of 6.5 cN/dtex and elongation rate of 20 %.

Comparative Example 1

A belt-shaped woven structure was formed in the same manner as Example 1 except that monofilaments each of which had a fineness of 330 detx were used as the weft threads.

Comparative Example 2

A belt-shaped woven structure was formed in the same manner as Example 1 except that polyester multifilaments, each of which had a fineness of 1100 dtex/96 f, a softening point of 240 °C, a rupture strength of 6.5 cN/dtex and elongation rate of 20 %, were solely used as the weft threads for weaving.

The belt-shaped woven structures of Examples and Comparative Examples thus formed were evaluated for Lateral rigidity, Abrasion resistance and Strength maintaining rate after abrasion, Smoothness in withdrawing and retracting of webbing, Productivity of webbing, Rupture strength and Elongation rate, and Comfort (Flexibility and Comfort for the wearer) in the following manner. The results are shown in Table 1.

Lateral rigidity

Loop hardness and Bending repulsion rate of each specimen were measured only in the lateral direction in conformity with JIS L-1096 8.20.3 Bending repulsion: Method C (Loop compression method) and marked as follows:

◎ : Loop hardness: not less than 2 N, Bending repulsion rate: not greater than 20 %
○ : Loop hardness: not less than 2 N, Bending repulsion rate: greater than 20 %
Δ : Loop hardness: less than 2 N, Bending repulsion rate: not greater than 20 %
✕ : Loop hardness: less than 2 N, Bending repulsion rate: greater than 20 %

Abrasion resistance and Strength maintaining rate after abrasion

Strength maintaining rate after abrasion of each specimen was measured in conformity with JIS D-4604 and marked as follows:

○: strength maintaining rate after abrasion was not less than 85 %
Δ: strength maintaining rate after abrasion was not less than 80 % and less than 85 %
✕: strength maintaining rate after abrasion was less than 80 %

Smoothness in withdrawing and retracting of webbing

Into a retractor produced by Autoliv Inc. installed in an automobile produced in 1999 by Volkswagen AG, each of belt-shaped woven structures (having a width of 5 cm and a length of 3 m) of Examples and Comparative Examples was mounted together with a spindle of 50 g. The woven structure was pulled out from the retractor for 1 meter, twisted by 180°, and retracted for 50 times for determining whether the woven structure is smoothly retractable. The results of the tests were marked as follows:

　　○: successfully retracted without fail
　　△: failed one or two times
　　×: failed three or more times

Productivity of webbing

Each woven structure was woven by a needle loom for two hours and an average woven length per one minute was calculated. After preliminarily weaving for one or two hours for adjusting the loom to an appropriate condition, measurements were carried out. The results of evaluations were marked as follows:

　　◎: Average woven length is not less than 2.5 m/minute
　　○: Average woven length is not less than 2.0 m/minute and less than 2.5 m/minute
　　△: Average woven length is not less than 1.5 m/minute and less than 2.0 m/minute
　　×: Average woven length is less than 1.5 m/minute

Comfort (Flexibility and Comfort for the wearer)

Each of the belt-shaped woven structures (having a width of 5 cm and a length of 3 m) of Examples and Comparative Examples was installed in an ordinary automobile as a seatbelt webbing. Each group of five monitors consisting of four male and one female persons of ages from twenties to fifties rode the automobile for two hours for conducting sensory assessment on flexibility and comfort for the wearer of the seatbelt. Each monitor wore on upper body thereof only a cloth close to an under wear such as T-shirts, blouse and polo shirts. The results of the assessments were marked as follows:

♦ Flexibility:

　　○: not more than one person felt unsatisfactory in flexibility
　　×: more than one person felt unsatisfactory in flexibility

♦ Comfort for the wearer:

　　○: not more than one person felt unsatisfactory in comfort for the wearer
　　×: more than one person felt unsatisfactory in comfort for the wearer

Table 1

|  |  | EXAMPLE | | | | | COMPARATIVE EXAMPLE | |
|---|---|---|---|---|---|---|---|---|
|  |  | 1 | 2 | 3 | 4 | 5 | 1 | 2 |
| Composition of belt-shaped woven structure | | | | | | | | |
|  | Heat fusible component in the weft threads (wt%) | 11.2 | 28 | 6.3 | 4.4 | 9.4 | — | — |
|  | Proportion of exposed heat fusible component (%) | 28 | 28 | 18.8 | 13.3 | 9.4 | — | — |
|  | Softening point of heat fusible component (°C) | 185 | 200 | 185 | 185 | 185 | — | — |
|  | Softening point of non-heat fusible component (°C) | 240 | 240 | 240 | 240 | 240 | 240 | 240 |

(continued)

| Evaluation | | | | | | | | | |
|---|---|---|---|---|---|---|---|---|---|
| | Lateral rigidity | | ◎ | ○ | ◎ | Δ | Δ | ◎ | × |
| | Strength maintaining rate after abrasion (%) | | 92 | 86 | 88 | 86 | 87 | 82 | 83 |
| | Abrasion resistance | | ○ | ○ | ○ | ○ | ○ | Δ | Δ |
| | Smoothness in withdrawing and retracting of webbing | | ○ | ○ | ○ | Δ | Δ | × | × |
| | Productivity of webbing | | ◎ | ◎ | ◎ | ◎ | ◎ | × | ◎ |
| | Comfort | | | | | | | | |
| | | Flexibility | ○ | ○ | ○ | ○ | ○ | × | ○ |
| | | Comfort for the wearer | ○ | ○ | ○ | ○ | ○ | × | ○ |

Examples 1 and 3 were excellent in Lateral rigidity with maintaining Flexibility, and obtained good evaluation in Smoothness in withdrawing and retracting of webbing. Although Example 3 and 4 were inferior to Example 1 in Lateral rigidity and Smoothness in withdrawing and retracting of webbing, these obtained good evaluation in Comfort worn as a seatbelt. Example 2 were excellent in Lateral rigidity with maintaining Flexibility, and obtained good evaluation in Smoothness in withdrawing and retracting of webbing. Example 2 was superior to Example 1 in Flexibility and Comfort for the wearer.

Example 6

A belt-shaped woven structure was formed in the same manner as Example 1 except that the core-sheath type heat fusible polyester filaments in Example 1 were replaced with polyester multifilaments, each of which had a fineness of 280 dtex/48 f; a softening point of 200 °C; Limiting viscosity of 0.69; Greatest heat shrinkage stress of 0.15 cN/dtex; BWS of 13 %; Dry heat shrinkage factor at 130 °C of 13 %; and Dry heat shrinkage factor at 180 °C of 12 %, which wholly comprised a copolymerized component to which 5 mol% of isophthalic acid and 5 mol% of 2,2-bis[4-(2-hydroxyethoxy)phenyl]propane were copolymerized.

Example 7

A belt-shaped woven structure was formed in the same manner as Example 1 except that the core-sheath type heat fusible polyester filaments in Example 1 were replaced with polyester multifilaments, each of which had a fineness of 280 dtex/48 f; a softening point of 210 °C; Limiting viscosity of 0.69; Greatest heat shrinkage stress of 0.12 cN/dtex; BWS of 10 %; Dry heat shrinkage factor at 130 °C of 11 %; and Dry heat shrinkage factor at 180 °C of 15 %, which wholly comprised a copolymerized component to which 3 mol% of isophthalic acid and 3 mol% of 2,2-bis[4-(2-hydroxyethoxy)phenyl]propane were copolymerized.

Although the thus obtained belt-shaped woven structure was inferior to Example 2 in rigidity, Example 7 had good Flexibility and Comfort for the wearer.

Example 8

A belt-shaped woven structure was formed in the same manner as Example 1 except that the core-sheath type heat fusible polyester filaments in Example 1 were replaced with polyester multifilaments, each of which had a fineness of 280 dtex/48 f; a softening point of 200 °C; Limiting viscosity of 0.69; Greatest heat shrinkage stress of 0.10 cN/dtex; BWS of 5 %; Dry heat shrinkage factor at 130 °C of 6 %; and Dry heat shrinkage factor at 180 °C of 12 %, which wholly comprised a copolymerized component to which 5 mol% of isophthalic acid and 5 mol% of 2,2-bis[4-(2-hydroxyethoxy) phenyl]propane were copolymerized.

Although the thus obtained belt-shaped woven structure was inferior to Example 6 in rigidity, Example 8 had good Flexibility and Comfort for the wearer.

The belt-shaped woven structures of Examples 2 and 6 to 8 thus formed were evaluated for Lateral rigidity, Abrasion resistance and Strength maintaining rate after abrasion, Smoothness in withdrawing and retracting of webbing, Productivity of webbing, Rupture strength and Elongation rate and Comfort (Flexibility and Comfort for the wearer), and the results of the evaluations are shown in Table 2.

Table 2

| | | EXAMPLE | | | |
| --- | --- | --- | --- | --- | --- |
| | | 2 | 6 | 7 | 8 |
| Composition of belt-shaped woven structure | | | | | |
| | Heat fusible component in the weft threads (wt%) | 28 | 28 | 28 | 28 |
| | Proportion of exposed heat fusible component (%) | 28 | 28 | 28 | 28 |
| | Softening point of heat fusible component (°C) | 200 | 200 | 210 | 200 |
| | Softening point of non-heat fusible component (°C) | 240 | 240 | 240 | 240 |
| | Boiling water shrinkage factor (BWS) (%) | 23 | 13 | 10 | 5 |
| | Dry heat shrinkage factor at 130 °C (%) | 21 | 13 | 11 | 6 |
| | Dry heat shrinkage factor at 180 °C (%) | 30 | 12 | 15 | 12 |
| Evaluation | | | | | |
| | Lateral rigidity | ○ | ○ | Δ | Δ |
| | Strength maintaining rate after abrasion (%) | 86 | 86 | 84 | 82 |
| | Abrasion resistance | ○ | ○ | Δ | Δ |
| | Smoothness in withdrawing and retracting of webbing | ○ | ○ | Δ | Δ |
| | Productivity of webbing | ◎ | ◎ | ◎ | ◎ |
| Comfort | | | | | |
| | Flexibility | ○ | ○ | ○ | ○ |
| | Comfort for the wearer | ○ | ○ | ○ | ○ |

**Claims**

1. A belt-shaped woven structure for a seat belt webbing formed by weaving a non-heat fusible synthetic fiber and a heat fusible synthetic fiber containing in a surface portion thereof a heat fusible component having a softening point lower by 30 °C or more than that of the non-heat fusible synthetic fiber,
**characterized by** the woven structure having a non-heat fusible synthetic fiber as warp threads thereof, and a synthetic fiber formed by aligning the non-heat fusible synthetic fibers and the heat fusible synthetic fibers in a parallel direction as weft threads thereof, so that a heat treatment on the woven structure at a temperature higher than the softening point of the heat fusible component fusion bonds the heat fusible synthetic fibers to each other or the heat fusible synthetic fiber and the non-heat fusible fiber
and in that the heat fusible synthetic fiber is a polyester multifilament comprising a polyethylene terephthalate copolymer which is copolymerized with a tertiary component and having a softening point of not greater than 200°C and a boiling water shrinkage factor (BWS) of 10 to 40 %.

2. A belt-shaped woven structure for a seat belt webbing as set forth in claim 1, wherein the heat fusible component in the heat fusible synthetic fiber is present in a proportion of not less than 5 % by weight with respect to a whole amount of the weft threads of the woven structure.

3. A belt-shaped woven structure for a seat belt webbing as set forth in claim 1 or 2, wherein not less than 15 % of the heat fusible component is exposed on the surface of the heat fusible synthetic fiber.

4. A belt-shaped woven structure for a seat belt webbing as set forth in claim 1 or 2, wherein the weft threads of the woven structure comprise a polyester multifilament having a fineness of 500 to 3000 dtex and include a heat fusible component having a softening point of 120 to 200 °C.

5. A belt-shaped woven structure for a seat belt webbing as set forth in claim 1 or 2, wherein the heat fusible synthetic fiber is a core-sheath type polyester multifilament comprising a copolyester mainly containing polyethylene terephthalate as a sheath component and a homopolyester as a core component, and the non-heat fusible synthetic fiber is a homopolyester multifilament.

6. A belt-shaped woven structure for a seat belt webbing as set forth in claim 1 or 2, wherein the heat fusible synthetic fiber is a polyester multifilament having a dry heat shrinkage stress of 0.1 to 1.0 cN/dtex.

7. A belt-shaped woven structure for a seat belt webbing as set forth in claim 1 or 2, wherein the heat fusible synthetic fiber is a polyester multifilament having a dry heat shrinkage factor at 180 °C of not less than 15 %.

8. A belt-shaped woven structure for a seat belt webbing as set forth in claim 1 or 2, wherein the woven structure is woven by means of a needle loom.

9. A method of producing a belt-shaped woven structure for a seat belt webbing according to claim 8, wherein a belt-shaped woven structure for a seat belt webbing is formed by weaving a non-heat fusible synthetic fiber and a heat fusible synthetic fiber containing in a surface portion thereof a heat fusible component having a softening point lower by 30°C or more than that of the non-heat fusible synthetic fiber by means of a needle loom,
**characterized in that** the woven structure having a non-heat fusible synthetic fiber as warp threads of the woven structure, and the non-heat fusible synthetic fibers and a polyester multifilament as the heat fusible synthetic fiber aligned in a parallel direction are interwoven as weft threads having a fineness of 250 to 1500 dtex of the woven structure, so that a heat treatment on the woven structure at a temperature higher than the softening point of the heat fusible component
fusion bonds the heat fusible synthetic fibers to each other or the heat fusible synthetic fiber and the non-heat fusible fiber,
and **in that** the heat fusible synthetic fiber is a polyester multifilament comprising a polyethylene terephthalate copolymer which is copolymerized with a tertiary component and having a softening point of not greater than 200°C and a boiling water shrinkage factor (BWS) of 10 to 40 %.

10. A method of producing a belt-shaped woven structure for a seat belt webbing as set forth in claim 9, wherein the heat fusible synthetic fiber has a monofilament fineness of 3 to 25 dtex.

11. A belt-shaped woven structure for a seat belt webbing as set forth in claim 1 or 2, wherein the woven structure is woven by twill weaving.

**Patentansprüche**

1. Gurtförmige Webstruktur für einen Sitzgurtgewebe, das durch Weben einer nicht wärmeverschmelzbaren synthetischen Faser und einer wärmeverschmelzbaren synthetischen Faser gebildet wird, die in einem Oberflächenbereich derselben eine wärmeverschmelzbare Komponente mit einem Erweichungspunkt enthält, der um 30 °C oder mehr niedriger als der der nicht wärmeverschmelzbaren synthetischen Faser ist,
**dadurch gekennzeichnet, dass** die Webstruktur als Kettfäden derselben eine nicht wärmeverschmelzbare synthetische Faser, und als Schussfäden derselben eine synthetische Faser aufweist, die durch Ausrichten der nicht wärmeverschmelzbaren synthetischen Fasern und der wärmeverschmelzbaren synthetischen Fasern in eine parallele Richtung gebildet wird, so dass eine Wärmebehandlung der Webstruktur bei einer über dem Erweichungspunkt der wärmeverschmelzbaren Komponente liegenden Temperatur die wärmeverschmelzbaren Fasern oder die wärmeverschmelzbare synthetische Faser und die nicht wärmeverschmelzbare Faser durch Schmelzen miteinander verbindet,
und dadurch, dass die wärmeverschmelzbare synthetische Faser ein Polyester-Multifilament ist, das ein Polyethylenterephthalat-Copolymer umfasst, das mit einer tertiären Komponente copolymerisiert wird und einen Erweichungspunkt, der nicht über 200 °C liegt, und einen Siedewasserschrumpffaktor (BWS) von 10 bis 40 % aufweist.

2. Gurtförmige Webstruktur für ein Sitzgurtgewebe nach Anspruch 1, wobei die wärmeverschmelzbare Komponente in der wärmeverschmelzbaren synthetischen Faser in einem Anteil von nicht weniger als 5 Gewichts-% in Bezug auf eine Gesamtmenge der Schussfäden der Webstruktur vorhanden ist.

**3.** Gurtförmige Webstruktur für ein Sitzgurtgewebe nach Anspruch 1 oder 2, wobei nicht weniger als 15 % der wärmeverschmelzbaren Komponente auf der Oberfläche der wärmeverschmelzbaren synthetischen Faser freiliegt.

**4.** Gurtförmige Webstruktur für ein Sitzgurtgewebe nach Anspruch 1 oder 2, wobei die Schussfäden der Webstruktur ein Polyester-Multifilament mit einer Feinheit von 500 bis 3000 dtex umfassen und eine wärmeverschmelzbare Komponente mit einem Erweichungspunkt von 120 bis 200 °C beinhalten.

**5.** Gurtförmige Webstruktur für ein Sitzgurtgewebe nach Anspruch 1 oder 2, wobei die wärmeverschmelzbare synthetische Faser ein Kern-Mantel-Polyester-Multifilament ist, das ein Copolyester umfasst, das hauptsächlich ein Polyethylenterephthalat als eine Mantelkomponente und ein Homopolyester als eine Kernkomponente enthält, und wobei die nicht wärmeverschmelzbare synthetische Faser ein Homopolyester-Multifilament ist.

**6.** Gurtförmige Webstruktur für ein Sitzgurtgewebe nach Anspruch 1 oder 2, wobei die wärmeverschmelzbare synthetische Faser ein Polyester-Multifilament mit einer Trockenhitzeschrumpfbelastung von 0,1 bis 1,0 cN/dtex ist.

**7.** Gurtförmige Webstruktur für ein Sitzgurtgewebe nach Anspruch 1 oder 2, wobei die wärmeverschmelzbare synthetische Faser ein Polyester-Multifilament mit einem Trockenhitzeschrumpffaktor bei 180 °C von nicht weniger als 15 % ist.

**8.** Gurtförmige Webstruktur für ein Sitzgurtgewebe nach Anspruch 1 oder 2, wobei die Webstruktur mittels Nadelstuhl gewebt wird.

**9.** Verfahren zur Herstellung einer gurtförmigen Webstruktur für ein Sitzgurtgewebe gemäß Anspruch 8, wobei eine gurtförmige Webstruktur für ein Sitzgurtgewebe durch Weben einer nicht wärmeverschmelzbaren synthetischen Faser und einer wärmeverschmelzbaren synthetischen Faser, die in einem Oberflächenbereich derselben eine wärmeverschmelzbare Komponente mit einem Erweichungspunkt enthält, der um 30 °C oder mehr niedriger ist als der der nicht wärmeverschmelzbaren synthetischen Faser, mittels eines Nadelstuhls gebildet wird, **dadurch gekennzeichnet, dass** die Webstruktur als Kettfäden der Webstruktur eine nicht wärmeverschmelzbare synthetische Faser umfasst, und die nicht wärmeverschmelzbare synthetische Faser und ein Polyester-Multifilament als die wärmeverschmelzbaren synthetischen Fasern, die in einer parallelen Richtung ausgerichtet sind, als Schussfäden mit einer Feinheit von 250 bis 1500 dtex miteinander verwoben sind, so dass eine Wärmebehandlung an der Webstruktur bei einer über dem Erweichungspunkt der wärmeverschmelzbaren Komponente liegenden Temperatur die wärmeverschmelzbaren synthetischen Fasern oder die wärmeverschmelzbare synthetische Faser und die nicht wärmeverschmelzbare Faser durch Schmelzen miteinander verbindet, und dadurch, dass die wärmeverschmelzbare synthetische Faser ein Polyester-Multifilament ist, das ein Polyethylenterephthalat-Copolymer umfasst, das mit einer tertiären Komponente copolymerisiert wird und einen Erweichungspunkt, der nicht über 200 °C liegt, und einen Siedewasserschrumpffaktor (BWS) von 10 bis 40 % aufweist.

**10.** Verfahren zur Herstellung einer gurtförmigen Webstruktur für ein Sitzgurtgewebe nach Anspruch 9, wobei die wärmeverschmelzbare synthetische Faser eine Monofilament-Feinheit von 3 bis 25 dtex umfasst.

**11.** Gurtförmige Webstruktur für ein Sitzgurtgewebe nach Anspruch 1 oder 2, wobei die Webstruktur durch Köperbindung gewebt wird.

## Revendications

**1.** Structure tissée en forme de ceinture pour une sangle de ceinture de sécurité formée par tissage d'une fibre synthétique non thermofusible et d'une fibre synthétique thermofusible contenant dans une partie de sa surface un composant thermofusible ayant un point de ramollissement inférieur par 30 °C ou plus à celui de la fibre synthétique non thermofusible, **caractérisée par** la structure tissée ayant une fibre synthétique non thermofusible en tant que fils de chaîne de celle-ci, et une fibre synthétique formée par l'alignement des fibres synthétiques non thermofusibles et des fibres synthétiques thermofusibles dans un sens parallèle en tant que fils de trame de celle-ci, de sorte qu'un traitement thermique sur la structure tissée à une température supérieure au point de ramollissement du composant thermofusible lie par fusion les fibres synthétiques thermofusibles les unes aux autres ou la fibre synthétique thermofusible et la fibre synthétique non thermofusible, et en ce que la fibre synthétique thermofusible est un multifilament de polyester comprenant un copolymère de téréphtalate de polyéthylène qui est copolymérisé avec un composant tertiaire et ayant un point de ramollissement qui n'est pas supérieur à 200 °C et un facteur de retrait à l'eau bouillante (BWS) de 10 à 40 %.

2.  Structure tissée en forme de ceinture pour une sangle de ceinture de sécurité selon la revendication 1, dans laquelle le composant thermofusible dans la fibre synthétique thermofusible est présent une proportion non inférieure à 5 % en poids par rapport à une quantité totale des fils de trame de la structure tissée.

3.  Structure tissée en forme de ceinture pour une sangle de ceinture de sécurité selon la revendication 1 ou 2, dans laquelle pas moins de 15 % du composant thermofusible sont exposés sur la surface de la fibre synthétique thermofusible.

4.  Structure tissée en forme de ceinture pour une sangle de ceinture de sécurité selon la revendication 1 ou 2, dans laquelle les fils de trame de la structure tissée comprennent un multifilament de polyester ayant une finesse de 500 à 3000 dtex et comprennent un composant thermofusible ayant un point de ramollissement de 120 à 200 °C.

5.  Structure tissée en forme de ceinture pour une sangle de ceinture de sécurité selon la revendication 1 ou 2, dans laquelle la fibre synthétique thermofusible est un multifilament de polyester de type noyau-enveloppe comprenant un copolyester contenant principalement du poly(téréphtalate d'éthylène) en tant que composant de l'enveloppe et un homopolyester en tant que composant du coeur, et la fibre synthétique non thermofusible est un multifilament d'homopolyester.

6.  Structure tissée en forme de ceinture pour une sangle de ceinture de sécurité selon la revendication 1 ou 2, dans laquelle la fibre synthétique thermofusible est un multifilament de polyester ayant une contrainte de thermorétrécissement à sec de 0,1 à 1,0 cN/dtex.

7.  Structure tissée en forme de ceinture pour une sangle de ceinture de sécurité selon la revendication 1 ou 2, dans laquelle la fibre synthétique thermofusible est un multifilament de polyester ayant un facteur de thermorétrécissement à sec à 180 °C de pas moins de 15 %.

8.  Structure tissée en forme de ceinture pour une sangle de ceinture de sécurité selon la revendication 1 ou 2, dans laquelle la structure tissée est tissée au moyen d'un métier à tisser à aiguilles.

9.  Procédé de production d'une structure tissée en forme de ceinture pour une sangle de ceinture de sécurité selon la revendication 8, dans lequel une structure tissée en forme de ceinture pour une sangle de ceinture de sécurité est formée par tissage d'une fibre synthétique non thermofusible et d'une fibre synthétique thermofusible contenant dans une partie de sa surface un composant thermofusible ayant un point de ramollissement inférieur par 30 °C ou plus à celui de la fibre synthétique non thermofusible par le biais d'un métier à tisser à aiguilles,
    **caractérisé en ce que** la structure tissée a une fibre synthétique non thermofusible en tant que fils de chaîne de la structure tissée, et les fibres synthétiques non thermofusibles et un multifilament de polyester en tant que fibre synthétique thermofusible alignée dans un sens parallèle sont intertissées en tant que fils de trame ayant une finesse de 250 à 1500 dtex de la structure tissée, de sorte qu'un traitement thermique sur la structure tissée à une température supérieure au point de ramollissement du composant thermofusible lie par fusion les fibres synthétiques thermofusibles les unes aux autres ou la fibre synthétique thermofusible et la fibre synthétique non thermofusible,
    et **en ce que** la fibre synthétique thermofusible est un multifilament de polyester comprenant un copolymère de poly (téréphtalate d'éthylène) qui est copolymérisé avec un composant tertiaire et ayant un point de ramollissement qui n'est pas supérieur à 200 °C et un facteur de retrait à l'eau bouillante (BWS) de 10 à 40 %.

10. Procédé de production d'une structure tissée en forme de ceinture pour une sangle de ceinture de sécurité selon la revendication 9, dans lequel la fibre synthétique thermofusible a une finesse de monofilament de 3 à 25 dtex.

11. Structure tissée en forme de ceinture pour une sangle de ceinture de sécurité selon la revendication 1 ou 2, la structure tissée étant tissée par tissage croisé.

Fig. 1

(a)          (b)          (c)          (d)

(e)          (f)          (g)          (h)

(i)          (j)          (k)          (l)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4107371 A
- JP 2000190812 A
- JP 2003041431 A
- JP 2000264162 A
- JP SHO55116831 B
- DE 20120160 U1
- JP 2004232159 A